Europäisches Patentamt

European Patent Office

Office européen des brevets

(19)

(11)    EP 1 019 734 B1

(12)    FASCICULE DE BREVET EUROPEEN

(45) Date de publication et mention
de la délivrance du brevet:
**16.07.2003 Bulletin 2003/29**

(21) Numéro de dépôt: **98947617.1**

(22) Date de dépôt: **07.10.1998**

(51) Int Cl.[7]: **G01P 15/13**, G01P 15/125

(86) Numéro de dépôt international:
**PCT/FR98/02139**

(87) Numéro de publication internationale:
**WO 99/018443 (15.04.1999 Gazette 1999/15)**

(54) **MOVABLE PLATE ACCELEROMETER WITH ELECTROSTATIC FEEDBACK**

BESCHLEUNIGUNGSMESSER MITTELS BEWEGLICHEM PLATTENELEMENT MIT
ELEKTROSTATISCHER RÜCKKOPPLUNG

ACCELEROMETER WITH MOBILE PLATE, COMPRISING COUNTER-REACTING
ELECTROSTATIC MOTOR

(84) Etats contractants désignés:
**DE FR GB**

(30) Priorité: **08.10.1997 FR 9712545**

(43) Date de publication de la demande:
**19.07.2000 Bulletin 2000/29**

(73) Titulaire: **Sercel**
**44470 Carquefou (FR)**

(72) Inventeurs:
• **MOREAU, Maurice**
**F-49270 Landemont (FR)**
• **MENARD, Jean-Paul**
**F-44470 Thouare sur Loire (FR)**

(74) Mandataire: **Texier, Christian et al**
**Cabinet Régimbeau**
**20, rue de Chazelles**
**75847 Paris cedex 17 (FR)**

(56) Documents cités:
EP-A- 0 565 462          FR-A- 2 724 463
US-A- 5 211 051          US-A- 5 610 335

• LEMKIN M ET AL: "A MICROMACHINED FULLY
DIFFERENTIAL LATERAL ACCELEROMETER"
PROCEEDINGS OF THE IEEE 1996 CUSTOM
INTEGRATED CIRCUITS CONFERENCE (CICC),
SAN DIEGO, MAY 5 - 8, 1996, no. CONF. 18, 5 mai
1996, pages 315-318, XP000686723 INSTITUTE
OF ELECTRICAL AND ELECTRONICS
ENGINEERS

## Description

L'invention concerne le domaine des capteurs d'accélération. Plus particulièrement, l'invention est un accéléromètre asservi, à plaque mobile, utilisant des variations de capacitance pour détecter le mouvement d'une masse.

Les accéléromètres micro-usinés sont maintenant bien connus dans l'industrie des capteurs. Ils sont généralement constitués d'une plaque mobile, la masse sismique, suspendue à une armature fixé par des ressorts ; l'ensemble, plaque-mobile-armature-ressorts, étant obtenu par découpe chimique dans une tranche de silicium.

Par exemple, la plaque mobile comprend une électrode. L'armature fixe comprend deux électrodes. L'électrode mobile constitue une capacité avec chacune des deux électrodes fixes. Lorsqu'une accélération est appliquée au capteur, la plaque mobile se déplace par rapport à l'armature fixe, créant ainsi un déséquilibre des capacités. Un circuit d'asservissement détecte la différence entre les deux capacités et réagit en appliquant une tension de contre-réaction, donc une force électrostatique, entre l'électrode de la plaque mobile et les électrodes de l'armature fixe afin de ramener la plaque mobile à sa position initiale. On dispose ainsi d'un moteur électrostatique de contre-réaction.

On sait que la raideur électrostatique est fonction de la force électrostatique. Pour un tel capteur, le principe du réglage de la raideur électrostatique est le suivant.

En l'absence de champ électrique, une force $F_m$ tend à ramener l'électrode mobile à sa position de repos grâce à la raideur $k_m$ des ressorts ($k_m$ est la dérivée de la force de rappel par rapport au déplacement). Mais, en présence d'un champ électrique (tension entre les électrodes fixes et l'électrode mobile), une force électrostatique $F_d$ attire l'électrode mobile vers l'une ou l'autre des électrodes fixes. Cette force est la somme de deux forces en sens inverse, proportionnelles au carré du champ électrique entre les électrodes :

$F_e = \varepsilon_0 . (S_1 . E_1^2 - S_2 . E_2^2)$, où $S_i$ est la surface du condensateur formé par l'électrode fixe i et l'électrode mobile, $E = V_i/d_i$, $V_i$ est la tension entre l'électrode i de la plaque fixe et l'électrode de la plaque mobile en regard, $d_i$ est la distance entre l'électrode i et l'électrode de la plaque mobile (i = 1 ou 2).

Cette force électrostatique est fonction de la distance entre électrodes, donc du déplacement, comme la force de rappel des ressorts, mais de sens opposé. Sa dérivée par rapport au déplacement est la raideur électrostatique $k_e$.

On sait aussi que la fréquence de résonance mècanique $f_{rm}$ est liée à la masse $m$ de la plaque mobile et à la raideur des ressorts $k_m$ :

$$f_{rm} = \frac{1}{2\pi}\sqrt{\frac{k_m}{m}}$$

La masse de la plaque mobile est généralement bien connue et bien contrôlée en fabrication, ce qui n'est pas le cas de la raideur $k_m$ des ressorts. Les performances sont donc très variables d'un lot de fabrication à un autre. Ce qui impose de résoudre un problème important mais difficile, au niveau de la réalisation de ces accéléromètres, qui est d'obtenir une fréquence de résonance mécanique de la cellule plaque mobile-ressort précise et reproductible. La dynamique (rapport signal maximum sur bruit) de ce type de capteur est en effet fortement dépendante de cette fréquence.

Pour les accéléromètres sensibles à la composante verticale, il y a également un autre problème à résoudre : l'affalement de la masse mobile sous l'effet de la pesanteur.

Dans les accéléromètres verticaux (sensibles à la composante verticale de l'accélération), la masse s'affale sous son propre poids d'une quantité $\Delta z = m.g/k_m$ ($m$ = masse de la plaque mobile, $g$ = accélération de la pesanteur, $k_m$ = raideur mécanique des ressorts).

De plus, comme la dynamique de l'accéléromètre est proportionnelle à la masse divisée par la raideur ($S = m/k$), pour obtenir de bonnes performances, il faut une masse importante et une raideur faible. Ceci conduit à un affalement sous pesanteur de forte amplitude.

Or, d'une part, en position verticale, pour un système en déformation libre, la distance entre les plaques fixes et la plaque mobile doit être au moins égale à l'affalement. Sinon, il faut recourir à des systèmes de rappel. Mais, d'autre part, une distance trop importante entre les électrodes conduit à des performances faibles en raison des difficultés d'obtention de champs électriques suflisants. L'affalement limite donc les performances du capteur.

Pour tenter de résoudre ces problèmes, un recentrage de la masse mobile sur l'armature est généralement opéré, qui impose le recours à des techniques de réalisation assez complexes telles que ;

 1. précontrainte des ressorts,
 2. ressorts additionnels de compensation,
 3. rappel électrostatique (cf. brevet n° US 5 345 824),
 4. rappel électromagnétique distant,
 5. étapes de fabrication supplémentaires (cf. brevet n° US 4 922 756).

Ainsi, le document US 4 922 756 décrit la fabrication d'un capteur micro-usiné dont les ressorts ont des constantes de raideur précisément contrôlées pendant le procédé de fabrication. Mais ceci s'obtient au prix d'étapes technologiques de fabrication supplémentaires.

Le brevet US 5 345 824 traite le problème de la dispersion de la constante de raideur des ressorts, en minimisant la constante de raideur mécanique $k_m$, mais en centrant la masse par un faible pourcentage de la force électrostatique totale disponible. Le signal en sortie est alors indépendant de la constante $k_m$ puisque les ressorts ne sont pas défléchis. Mais dans ce cas, la sensibilité de l'accéléromètre est modifiée.

L'homme du métier a donc l'habitude de chercher un compromis entre l'optimisation des performances par la réduction de la constante de raideur, mais qui augmente l'affalement, l'optimisation des performances par la diminution de la distance entre électrodes pour obtenir des champs électriques suffisants mais qui limitent les possibilités d'affalement et l'optimisation de la plage de fréquence utile.

Le dispositif selon l'invention est un accéléromètre asservi à plaque mobile conforme à la définition donnée en revendication 1 annexée.

Un tel dispositif de réglage de la raideur selon l'invention améliore la performance du système puisqu'il permet simultanément :

1. de compenser la dispersion de la raideur mécanique des ressorts de suspension de la plaque mobile,
2. de limiter l'affalement des accéléromètres verticaux grâce à l'utilisation d'une forte raideur mécanique, compensée par une forte raideur électrostatique,
3. d'optimiser les performances dans la bande passante utile.

On notera qu'en plaçant délibérément la fréquence de résonance mécanique au-delà de la fréquence haute de la bande utile, les préjugés de l'homme du métier ont été vaincus, cette solution n'étant, à priori, pas favorable à la dynamique, qui est proportionnelle à $S = m/k_m$.

Selon un mode de réalisation avantageux de l'accéléromètre selon l'invention, celui-ci comprend deux électrodes fixes, électriquement isolées entre elles.

Dans un autre mode de réalisation avantageux de l'accéléromètre selon l'invention, celui-ci comprend une seule électrode mobile.

Selon un autre mode de réalisation avantageux, le circuit électronique de l'accéléromètre selon l'invention permet un multiplexage temporel de chaque électrode mobile.

Selon encore un autre mode de réalisation avantageux, l'accéléromètre selon l'invention a un cycle de multiplexage temporel qui comporte quatre étapes :

- une première étape pendant laquelle un échantillon de tension et son symétrique par rapport à la masse, sont appliqués respectivement entre chaque électrode fixe et l'électrode mobile,

- une deuxième étape pendant laquelle la charge de la capacité constituée par l'une des deux électrodes fixes et l'électrode mobile et la charge de la capacité constituée par l'autre électrode fixe et l'électrode mobile sont remises à zéro,

- une troisième étape, pendant laquelle une tension de contre réaction est appliquée à l'une ou l'autre des capacités constituées par l'électrode mobile et l'une des électrodes fixes, en fonction d'une décision prise par le système d'asservissement, et

- une quatrième étape, pendant laquelle la même opération qu'à la deuxième étape est répétée.

Dans un autre mode de réalisation avantageux, le circuit électronique de l'accéléromètre selon l'invention permet de faire varier les amplitudes des tensions entre chaque électrode fixe et chaque électrode mobile, pour régler la raideur électrostatique.

Selon encore un autre mode de réalisation avantageux de circuit électronique de l'accéléromètre selon l'invention permet d'ajuster la durée des étapes du multiplexage temporel.

Selon encore un autre mode de réalisation avantageux de l'accéléromètre selon l'invention, l'ajustage de la durée des étapes du multiplexage temporel constitue un moyen pour régler la raideur électrostatique.

Dans encore un autre mode de réalisation avantageux de l'accéléromètre selon l'invention, le réglage de la raideur électrostatique constitue un moyen pour compenser la dispersion sur la raideur mécanique des ressorts.

Dans un autre mode de réalisation avantageux de l'accéléromètre selon l'invention, le réglage de la raideur électrostatique constitue un moyen pour réduire l'affalement lorsque l'accéléromètre est en position verticale, sans perte de performance.

Selon un autre mode de réalisation de l'accéléromètre selon l'invention, le réglage de la raideur électrostatique constitue un moyen pour optimiser les performances en fonction de la bande utile.

L'accéléromètre selon l'invention peut aussi être un élément constitutif d'un autre dispositif plus complexe.

La description qui suit, d'un mode de réalisation particulier de l'invention est purement illustrative et non limitative. Elle doit être lue en regard des figures annexées :

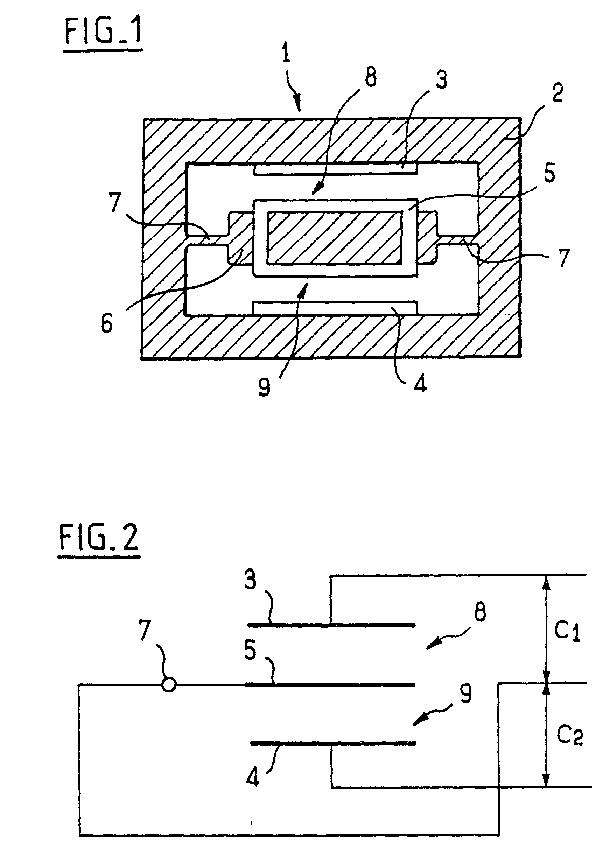

- La figure 1 représente schématiquement un mode particulier mais non limitatif de réalisation du capteur de l'accéléromètre selon l'invention.

- La figure 2 est une représentation schématique du dispositif capacitif du capteur.

- La figure 3 est un synoptique d'un mode particulier, mais non limitatif, de réalisation de l'accéléromètre selon l'invention.

- La figure 4 représente schématiquement un exemple de période de multiplexage de l'électrode mobile.

L'invention, qui peut être réalisée et fonctionner selon le mode particulier mais non limitatif suivant, comprend un capteur 1 et un circuit électronique 10.

Le capteur 1 comprend les éléments suivants :

- une armature 2,
- deux électrodes fixes 3 et 4 rigidement solidaires de l'armature 2,
- une électrode mobile 5 supportée par une plaque mobile 6,
- des ressorts 7 reliant de manière élastique la plaque mobile 6 à l'armature 2.

La plaque mobile 6 qui supporte l'électrode mobile 5, l'armature 2 à laquelle sont liées les électrodes fixes 3 et 4, ainsi que les ressorts 7 sont micro-usinés dans un substrat semi-conducteur, par les procédés technologiques de micro-fabrication usuels de la micro-électronique : gravure chimique, érosion ionique, photo ou électrolithographie, implantation ionique, etc. Le semi-conducteur peut être du silicium par exemple.

L'électrode mobile 5 est formée par une zone conductrice simple ou plusieurs zones conductrices électriquement connectées entre elles.

Les électrodes fixes 3 et 4 sont chacune formées par une zone conductrice simple ou plusieurs zones conductrices électriquement connectées entre elles. Les électrodes fixes 3 et 4, ainsi décrites, sont électriquement isolées l'une de l'autre.

L'électrode mobile 5 est électriquement isolée des électrodes fixes 3 et 4.

L'électrode mobile 5 forme une capacité avec chacune des électrodes fixes 3 et 4. Le capteur 1 comprend donc deux capacités 8 et 9 ayant l'électrode mobile 5 comme électrode commune.

L'électrode mobile 5 doit se déplacer, entre les deux électrodes fixes 3 et 4, sous l'effet d'une force. Ainsi, lorsqu'une accélération est appliquée au capteur 1, le déplacement de l'électrode mobile 5, crée simultanément une variation des capacitances des capacités 8 et 9.

Dans une réalisation avantageuse mais non limitative, le circuit électronique 10 est de type à « capacités commutées ». Il comprend aussi des générateurs de tension 14, 15 et 19, une capacité 21, un amplificateur 22 et un système d'asservissement 20. Il est cadencé au rythme d'une horloge 30.

Quatre commutateurs 11, 12, 13 et 17 permettent de mettre en circuit ou hors-circuit, sélectivement et pendant certaines phases du cycle de l'horloge 30, certains éléments du circuit électronique 10.

Le commutateur 11 permet de relier sélectivement l'électrode fixe 3 à la masse, à + $V_m$ 14 ou au circuit générateur d'une tension de contre-réaction $V_{cr}$ 16. Le commutateur 12 permet de relier l'électrode fixe 4 sélectivement à la masse, à - $V_m$ 15 ou au circuit générateur de la tension de contre-réaction $V_{cr}$ 16. Le commutateur 13 permet de relier sélectivement l'électrode mobile 5 à l'entrée du système d'asservissement 20, ou à la masse. Le commutateur 17 permet de mettre le générateur de tension $V_{ref}$ 19 en circuit.

Les commutateurs 11, 12 et 13 permettent aussi de mettre les électrodes 3, 4 et 5 à la masse pour décharger respectivement les condensateurs 8 et 9. Le condensateur 21 est aussi déchargé par un commutateur (non représenté).

Avantageusement, un circuit $RC$ parallèle 18 est introduit dans le circuit générateur de la tension de contre-réaction $V_{cr}$ 16. Le circuit $RC$ parallèle 18 comprend une capacité de décharge $C_d$ 23 et une résistance de décharge $R_d$ 24.

Ce circuit $RC$ parallèle 18 est placé en parallèle d'un générateur de tension $V_{ref}$ 19. Le commutateur 17 permet de connecter le circuit $RC$ parallèle 18 au générateur de tension $V_{ref}$ 9.

Comme expliqué plus loin, le système d'asservissement 20 détecte la variation des capacités 8 et 9 en appliquant une tension + $V_m$ et - $V_m$ entre l'électrode mobile 5 et les électrodes fixes 3 et 4, et réagit en appliquant une tension de contre-réaction + $V_{cr}$ entre l'électrode mobile 5 et l'une des électrodes fixes 3 ou 4, l'ensemble électrode-mobile-électrodes-fixes constituant alors un moteur électrostatique de contre-réaction qui ramène l'électrode mobile 5 à sa position initiale. Le système d'asservissement 20 peut comprendre un système de modulation Sigma-delta.

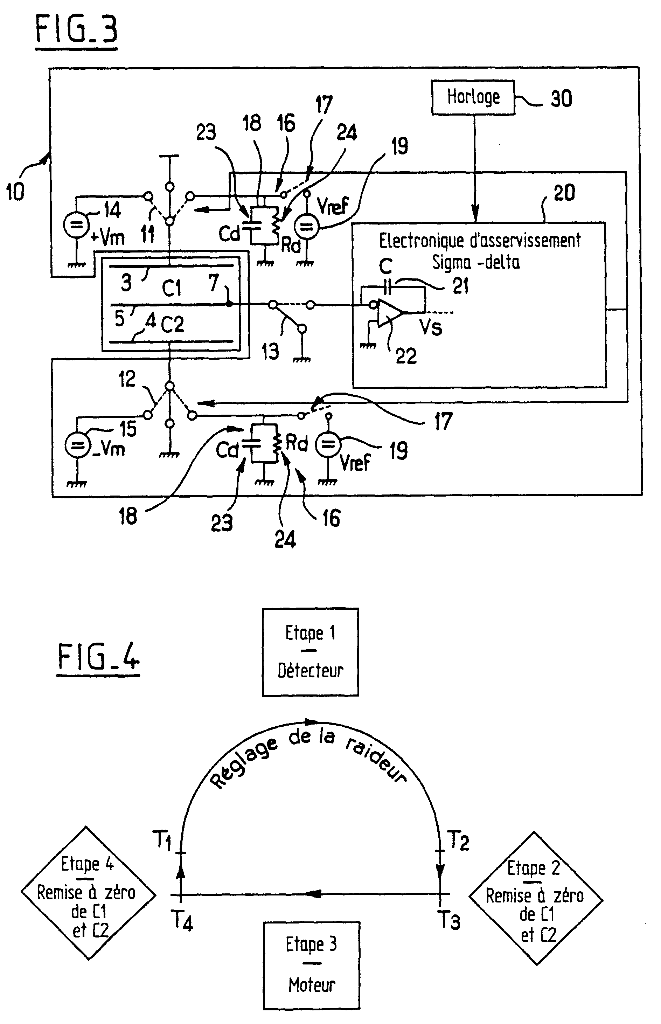

Le cycle de l'horloge 30 définit un multiplexage de l'électrode mobile 5. Une période de ce multiplexage est illustré par la figure 4. Cette période définit un intervalle de temps P.

Au temps $T_1$ de la période du multiplexage, les commutateurs 11 et 12 mettent les électrodes 3 et 4 en contact électrique avec les générateurs de tension 14 et 15. Le commutateur 13 met en contact l'électrode mobile 5 avec la capacité 21. Cette position des commutateurs 11, 12 et 13 est maintenue jusqu'au temps $T_2$. Cet intervalle de temps entre $T_1$ et $T_2$ constitue l'étape 1 de détection de la position de l'électrode mobile 5.

Au temps $T_2$, les commutateurs 11, 12 et 13 mettent respectivement les électrodes fixes 3 et 4 et l'électrode mobile 5 à la masse et restent dans cette configuration jusqu'au temps $T_3$. L'intervalle de temps entre $T_2$ et $T_3$ définit l'étape 2.

Au temps $T_3$, les commutateurs 11 et 12 mettent en contact les électrodes 3 ou 4 avec le générateur de tension 16 et restent dans cette position jusqu'au temps $T_4$. De $T_3$ à $T_4$, se déroule l'étape 3 d'application de la force de contre-réaction, qui joue un rôle moteur sur l'électrode mobile 5.

Au temps $T_4$, les commutateurs 11 et 12 mettent les électrodes fixes 3 et 4 à la masse et restent dans cette position jusqu'au temps $T_1$ plus P. De $T_4$ à $T_1$ plus P, se déroule l'étape 4.

Le cycle de l'horloge 30 définit donc 4 étapes :

Etape 1 : La position de l'électrode mobile 5 est mesurée par application de deux échelons de tension $+ V_m$ et $- V_m$, symétriques par rapport à la masse, entre les deux électrodes fixes 3 et 4 respectivement et l'électrode mobile 5. Si l'électrode mobile 5 n'est pas centrée, la valeur $C_1$ de la capacité 8 et la valeur $C_2$ de la capacité 9 ne sont pas égales, il en résulte un transfert de charge $\Delta Q = V_m (C_1 - C_2)$ dans la capacité 21. La position de l'électrode mobile 5, à la fin de l'étape 1 est représentée par la tension $V_s$.

Etape 2 : La charge des capacités 8 et 9 est remise à zéro.

Etape 3 : Une tension de contre-réaction $V_{er}$, est appliquée à l'une des capacités 8 ou 9 en fonction d'une décision prise par le système d'asservissement 20, décision elle-même fonction de l'écart de position de l'électrode mobile 5 par rapport à sa position nominale (celle où $C_1 = C_2$). Cette tension $V_{cr}$ développe une force électrostatique $F_e$ qui tend à ramener l'électrode mobile 5 à sa position nominale.

Etape 4 : La charge des capacités 8 et 9 est remise à zéro.

Les remises à zéro des valeurs des capacités 8 et 9 annihilent les interférences entre la mesure de position et l'application de la tension de contre-réaction.

La durée de chacune de ces étapes peut être contrôlée.

La tension de contre-réaction en $V_{cr}$ peut être constante, c'est-à-dire appliquée aux électrodes 3 ou 4 et 5, sous forme d'une impulsion carrée, mais plus avantageusement, la tension de contre-réaction $V_{cr}$ est appliquée aux électrodes 3 ou 4 et 5 sous forme d'une impulsion avec un front montant droit et un front descendant du type décroissance exponentielle.

Ceci permet de réduire la sensibilité aux fronts d'horloge, c'est-à-dire au bruit de phase de l'horloge, et donc d'améliorer le rapport signal/bruit du capteur. En effet, la force électrostrostatique $F_e$ appliquée à l'électrode mobile 5 est proportionnelle à l'intégrale du carré de la tension de contre-réaction $V_{cr}$. Le bruit de phase intervenant sur le front descendant de l'impulsion modifie donc peu la valeur de cette intégrale lorsque la tension de contre-réaction $V_{cr}$ devient progressivemnet faible, voire nulle, en fin d'impulsion. Ainsi, par exemple, une décroissance du type décroissance exponentielle ou telle que celle d'une fonction sinus amorti peut convenir.

Avantageusement, dans ce cas, la tension de contre-réaction $V_{cr}$ est générée de la manière suivante : La capacité $C_d$ 23 est chargée à une tension de référence $V_{réf}$ grâce au générateur de tension $V_{réf}$ 19 pendant les étapes 1, 2 et/ou 4. Pendant l'étape 3 qui est l'étape d'application de la tension de contre-réaction $V_{cr}$,

la capacité $C_d$ 23 est connectée entre l'électrode mobile 5 et l'une ou l'autre des électrodes fixes 3 et 4, ainsi qu'aux bornes de la résistance de décharge $R_d$ 24. La décision d'appliquer la tension de contre-réaction $V_{cr}$ à l'une ou à l'autre des électrodes fixes 3 et 4 est prise en fonction du signe de déplacement de la plaque mobile 6.

Le principe du réglage de la fréquence de résonance de l'accéléromètre selon l'invention est décrit ci-dessous.

La fréquence de résonance apparente $f_{ra}$ est liée à la masse de la plaque mobile et à la raideur apparente de rappel :

$$ f_{rm} = \frac{1}{2\pi}\sqrt{\frac{k_a}{m}} $$

avec $k_a$ (raideur apparente) = $k_m$ (raideur des ressorts) - $k_e$ (raideur électrostatique) et $m$ masse de la plaque mobile.

On peut ainsi ajuster la valeur de $k_a$ en jouant sur la raideur électrostatique $k_e$.

Les performances du capteur sont améliorées du fait qu'elles sont liées à la fréquence apparente $f_{ra}$ et non à la fréquence de résonance mécanique

$$ f_{rm} = \frac{1}{2\pi}\sqrt{\frac{k_m}{m}}, $$

et que l'on peut réduire $k_a$, c'est-à-dire augmenter la dynamique qui est proportionnelle à $S = m/k_a$.

Au cours de la réalisation de l'accéléromètre selon l'invention, il est choisi de placer délibérément la fréquence de résonance mécanique au-delà de la fréquence haute de la bande d'intérêt (raideur $k_m$ élevée). Ceci permet de limiter l'affalement, de réduire la distance inter-électrodes, et donc d'utiliser des champs électriques élevés (donc une forte raideur électrostatique $k_e$) et dosés afin de ramener la fréquence de résonance apparente dans la bande d'intérêt.

La gamme de fréquence envisageable pour le multiplexage est par exemple 100 à 500 fois la fréquence utile la plus élevée.

Ceci facilite l'obtention d'un gain de boucle élevé dans la bande d'intérêt sans grever la stabilité du système bouclé.

Selon un mode particulier mais non limitatif de réglage de l'accéléromètre selon l'invention, la raideur électrostatique $k_e$ est assuré par un ajustage de la durée de l'étape 1. On préfère un ajustage de la durée de l'étape 1 parce qu'elle agit uniquement sur le paramètre $k_e$.

Dans les systèmes continus, la raideur électrostatique, dérivée de la force électrostatique par rapport à la distance entre électrodes, est proportionnelle au carré de la tension, et inversement au cube de la distance entre les électrodes. Dans les systèmes échantillonnés, dans la mesure où la fréquence d'échantillonnage est très supérieure à la fréquence de coupure du système, elle est également proportionnelle au rapport cyclique d'application de la tension (Ta/Te où Ta est la période d'application de la tension de contre-réaction $V_{cr}$ et Te est la période d'échantillonnage).

Dans d'autres modes de réalisation de la présente invention, il pourrait être choisi de faire varier les amplitudes des tensions entre les électrodes fixes 3 et 4 et l'électrode mobile 5, grâce au circuit électronique 10. Cette opération pouvant aussi constituer un moyen pour régler la raideur électrostatique, même si les performances de l'accéléromètre, dans ce cas, sont moins bonnes qu'en ajustant la raideur électrostatique en jouant sur la durée de l'étape 1. La variation de l'amplitude de la tension appliquée pendant l'étape 1 modifie la sensibilité de la détection de position de l'électrode mobile 5, ce qui influe sur la stabilité de la boucle de contre-réaction. La variation de l'amplitude de la tension ou de la durée de l'étape 3 modifie aussi la sensibilité de l'accéléromètre. Il pourrait aussi être opéré un réglage de la raideur électrostatique, à la fois en faisant varier l'amplitude des tensions appliquées entre les électrodes fixes 3 et 4 et l'électrode mobile, et en faisant varier la durée de l'étape de mesure de position et/ou de l'étape d'application de la force électrostatique, au cours du multiplexage temporel.

Grâce au réglage de la fréquence de résonance décrit ci-dessus, il est possible :

- de compenser la dispersion de raideur mécanique des ressorts 7 et donc, de simplifier la réalisation des accéléromètres,
- de réduire l'affalement des accéléromètres verticaux, sans perte de performance,
- d'optimiser les performances en fonction de la bande utile.

En prospection sismique pour la géophysique, par exemple, il est courant de faire varier la bande passante de la chaîne d'acquisition des signaux en fonction des zones explorées ou des objectifs de profondeur d'investigation : 100, 200 ou 400 Hz. Si la fréquence de résonance d'un accéléromètre de l'art antérieur est optimisée pour une bande passante donnée, 100 Hz par exemple, les performances sont très dégradées en utilisation à 400 Hz. En réajustant la raideur électrostatique aux nouvelles conditions d'utilisation, comme avec l'accéléromètre selon l'invention, il est possible de retrouver les performances optimales.

Tel que décrit ci-dessus, l'accéléromètre selon l'invention comprend un capteur 1 avec une électrode mobile 5 et deux électrodes fixes 3 et 4, mais le capteur 1 peut aussi être constitué de plusieurs électrodes mobiles 5 et plus de deux électrodes fixes 3 ou 4. De même, plusieurs capteurs 1 peuvent être associés pour constituer un accéléromètre selon l'invention, dans lequel la fréquence de résonance de chaque capteur 1 est déterminée par une raideur mécanique et un réglage de la raideur électrostatique tels que décrits ci-dessus.

Un accéléromètre selon l'invention peut être employé pour la prospection sismique, la détection de chocs pour des systèmes de sécurité comme les « airbags », etc.

De nombreux dispositifs ayant des applications variées peuvent avoir parmi leurs éléments constitutifs, un accéléromètre défini par la présente invention ci-dessus décrite et ci-dessous revendiquée.

## Revendications

1. Accéléromètre asservi à plaque mobile utilisant des variations de capacitance pour détecter le mouvement d'une masse, comprenant :

   - au moins deux électrodes fixes (3,4) rigidement solidaires d'une armature (2),
   - au moins une électrode mobile (5) suspendue par des ressorts (7) à l'armature (2), entre les deux électrodes fixes (3, 4), de manière à former deux capacités (8, 9), chaque électrode mobile (5) étant susceptible de se déplacer entre les électrodes fixes (3, 4), sous l'effet d'une accélération, créant ainsi une variation de chaque capacité (8, 9),

     **caractérisé en ce qu'**

   - il comprend un circuit électronique (10) permettant de régler la raideur électrostatique d'un ensemble constitué d'au moins deux électrodes fixes (3,4) et d'une électrode mobile (5), et comprenant un système d'asservissement (20) détectant la variation de chaque capacité (8, 9) par application de deux tensions symétriques ($+V_{mn}$ $-V_m$) par rapport à la masse, et réagissant en appliquant une tension de contre-réaction ($+V_{cr}$,-$V_{cr}$) entre chaque électrode mobile (5) et une des électrodes fixes (3,4) en regard de ladite électrode mobile (5), **en ce que**
   - les ressorts (7) ont une raideur choisie de manière à placer délibérément la fréquence de résonance mécanique au-delà de la fréquence haute de la bande d'intérêt, et **en ce que**
   - le circuit (10), qui permet le réglage de la raideur électrostatique, est adapté pour ramener la fréquence de résonance apparente dans la bande d'intérêt.

2. Accéléromètre selon la revendication 1 **caractérisé en ce qu'**il comprend deux électrodes fixes (3) électriquement isolées entre elles.

3. Accéléromètre selon l'une des revendications précédentes **caractérisé en ce qu'**il comprend une seule électrode mobile (5).

4. Accéléromètre selon l'une des revendications précédentes **caractérisé en ce que** le circuit électronique (10) permet un multiplexage tempord de chaque électrode mobile (5).

5. Accéléromètre selon les revendications 2, 3 et 4 prises en combinaison, dont le cycle de multiplexage comporte quatre étapes, qui sont, une première étape pendant laquelle un échantillon de tension et son symétrique par rapport à la masse, sont appliqués respectivement entre chaque électrode fixe (3,4) et l'électrode mobile (5), une deuxième étape pendant laquelle la charge de la capacité (8, 9) constituée par l'une des deux électrodes fixes (3, 4) et l'électrode mobile (5) et la charge de la capacité constituée par l'autre électrode fixe (3, 4) et l'électrode mobile (5) sont remises à zéro, une troisième étape, pendant laquelle une tension de contre-réaction est appliquée à l'une ou l'autre des capacités (8, 9) constituées par l'électrode mobile (5) et l'une des électrodes fixes (3, 4), en fonction d'une décision prise par le système d'asservissement (20) et une quatrième étape, pendant laquelle la même opération qu'à la deuxième étape est répétée.

6. Accéléromètre selon l'une des précédentes revendications dont le circuit électronique (10) permet de faire varier les amplitudes des tensions entre chaque électrode fixe (3, 4) et chaque électrode mobile (5) pour régler la raideur électrostatique.

7. Accéléromètre selon l'une des précédentes revendications dont le circuit électronique (10) permet d'ajuster la durée des étapes du multiplexage temporel.

8. Accéléromètre selon la revendication 7, **caractérisé en ce que** l'ajustage de la durée des étapes de multiplexage temporel constitue un moyen pour régler la raideur électrostatique.

9. Accéléromètre selon l'une des revendications 6 et 8, **caractérisé en ce que** le réglage de la raideur électrostatique constitue un moyen pour compenser la dispersion sur la raideur mécanique des ressorts (7).

10. Accéléromètre selon l'une des revendications 6, 8 et 9, **caractérisé en ce que** le réglage de la raideur électrostatique constitue un moyen pour réduire l'affalement lorsqu'il est en position verticale, sans perte de performance.

11. Accéléromètre selon l'une des revendications 6, et 8 à 10, **caractérisé en ce que** le réglage de la raideur électrostatique constitue un moyen pour optimiser les performances en fonction de la bande utile.

12. Accéléromètre selon l'une des revendications précédentes, **caractérisé en ce que** la tension de contre-réaction est appliquée entre chaque électrode mobile (5) et l'électrode fixe (3 ou 4) sous forme d'une impulsion avec un front descendant devenant faible, voire nul, en fin d'impulsion.

13. Accéléromètre selon l'une des revendications précédentes, **caractérisé en ce qu'**il comprend un circuit RC parallèle (18) pour générer une tension de contre-réaction sous forme d'une impulsion avec un front montant droit et un front descendant du type décroissance exponentielle.

14. Application d'un accéléromètre conforme à l'une des revendications précédentes, à la prospection sismique.


**Patentansprüche**

1. Beschleunigungsmesser, der durch eine bewegliche Platte gesteuert ist und Kapazitätsänderungen zum Detektieren der Bewegung einer Masse verwendet, umfassend:

   - wenigstens zwei feste Elektroden (3, 4), die mit einer Armatur (2) starr einstückig sind,
   - wenigstens einer beweglichen Elektrode (5), die durch Federn (7) zwischen den beiden festen Elektroden (3, 4) an der Armatur (2) aufgehängt ist, derart, daß zwei Kapazitäten (8, 9) gebildet werden, wobei jede bewegliche Elektrode (5) unter der Wirkung einer Beschleunigung zwischen den festen Elektroden (3, 4) versetzbar ist, wodurch sie eine Änderung von jeder Kapazität (8, 9) erzeugt,

     **dadurch gekennzeichnet, daß**

   - er eine elektronische Schaltung (10) aufweist, die ein Einstellen der elektrostatischen Steifigkeit einer durch wenigstens zwei feste Elektroden (3, 4) und eine bewegliche Elektrode (5) gebildeten Gruppe erlaubt und ein Regelsystem (20) umfaßt, das die Änderung von jeder Kapazität (8, 9) durch Anlegen zweier, gegenüber der Masse symmetrischer Spannung ($+V_m$, $-V_m$) detektiert und durch Anlegen einer Gegenwirkungsspannung ($+V_{cr}$, $-V_{cr}$) zwischen jeder beweglichen Elektrode (5) und einer der festen Elektroden (3, 4) gegenüber der beweglichen Elektrode (5) reagiert, und dadurch, daß
   - die Federn (7) eine Steifigkeit haben, die derart gewählt ist, daß die Frequenz der mechanischen Resonanz absichtlich über der oberen Frequenz des interessierenden Bandes liegt, und dadurch, daß

- die Schaltung (10), welche die Einstellung der elektrostatischen Steifigkeit erlaubt, dazu eingerichtet ist, die Frequenz der scheinbaren Resonanz in das interessierende Band herabzusetzen.

2. Beschleunigungsmesser nach Anspruch 1, **dadurch gekennzeichnet, daß** er zwei feste Elektroden (3) umfaßt, die voneinander elektrisch isoliert sind.

3. Beschleunigungsmesser nach einem der vorhergehenden Ansprüche, **dadurch gekennzeichnet, daß** er eine einzelne bewegliche Elektrode (5) umfaßt.

4. Beschleunigungsmesser nach einem der vorhergehenden Ansprüche, **dadurch gekennzeichnet, daß** die elektronische Schaltung (10) eine Zeitmultiplexierung jeder beweglichen Elektrode (5) erlaubt.

5. Beschleunigungsmesser nach den in Kombination genommenen Ansprüchen 2, 3 und 4, wobei der Zyklus der Multiplexierung vier Schritte aufweist, bei denen es sich um folgende handelt: einen ersten Schritt, während dem eine Probespannung und deren zur Masse symmetrische an jede feste Elektrode (3, 4) und die bewegliche Elektrode (5) respektive angelegt werden, einen zweiten Schritt, während dem die Ladung der Kapazität (8, 9), die durch eine der beiden festen Elektroden (3, 4) und die bewegliche Elektrode (5) gebildet wird, und die Ladung der Kapazität, die durch die andere feste Elektrode (3, 4) und die bewegliche Elektrode (5) gebildet wird, auf Null gesetzt werden, einen dritten Schritt, während dem eine Gegenwirkungsspannung an die eine oder andere der Kapazitäten (8, 9), die durch die bewegliche Elektrode (5) und eine der festen Elektroden (3, 4) gebildet werden, in Abhängigkeit von einer durch das Regelsystem (20) getroffenen Entscheidung angelegt wird, und einen vierten Schritt, während dem die gleiche Operation wie bei der zweiten Stufe wiederholt wird.

6. Beschleunigungsmesser nach einem der vorhergehenden Ansprüche, wobei die elektronische Schaltung (10) erlaubt, die Spannungsamplituden zwischen jeder festen Elektrode (3, 4) und jeder beweglichen Elektrode (5) zu variieren, um die elektrostatische Steifigkeit einzustellen.

7. Beschleunigungsmesser nach einem der vorhergehenden Ansprüche, wobei die elektronische Schaltung (10) erlaubt, die Dauer der Zeitmultiplexierungsschritte zu justieren.

8. Beschleunigungsmesser nach Anspruch 7, **dadurch gekennzeichnet, daß** die Justierung der Dauer der Zeitmultiplexierungsschritte ein Mittel zum Einstellen der elektrostatischen Steifigkeit bildet.

9. Beschleunigungsmesser nach einem der Ansprüche 6 und 8, **dadurch gekennzeichnet, daß** die Einstellung der elektrostatischen Steifigkeit ein Mittel zum Kompensieren der Streuung in der mechanischen Steifigkeit von Federn (7) bildet.

10. Beschleunigungsmesser nach einem der Ansprüche 6, 8 und 9, **dadurch gekennzeichnet, daß** die Einstellung der elektrostatischen Steifigkeit ein Mittel zum Verringern des Absinkens, wenn er in vertikaler Stellung ist, ohne Leistungsverlust bildet.

11. Beschleunigungsmesser nach einem der Ansprüche 6 und 8 bis 10, **dadurch gekennzeichnet, daß** die Einstellung der elektrostatischen Steifigkeit ein Mittel zum Optimieren der Leistungseigenschaften in Abhängigkeit von dem Nutzband bildet.

12. Beschleunigungsmesser nach einem der vorhergehenden Ansprüche, **dadurch gekennzeichnet, daß** die Gegenwirkungsspannung zwischen jeder beweglichen Elektrode (5) und der festen Elektrode (3 oder 4) in Form eines Pulses mit einer geringer werdenden, am Ende des Pulses sogar Null werdenden, Rückflanke angelegt wird.

13. Beschleunigungsmesser nach einem der vorhergehenden Ansprüche, **dadurch gekennzeichnet, daß** er eine parallele RC-Schaltung (18) zum Erzeugen einer Gegenwirkungsspannung in Form eines Pulses mit einer geraden Vorderflanke und einer Rückflanke vom exponentiell abnehmenden Typ aufweist.

14. Anwendung eines Beschleunigungsmessers gemäß einem der vorhergehenden Ansprüche zur seismischen Erkundung.

**Claims**

1. Slaved mobile plate accelerometer using variations of capacitance to detect the movement of a mass, comprising:

- at least two fixed electrodes (3, 4) rigidly attached to an armature (2), and
- at least one mobile electrode (5) suspended by springs (7) from the armature (2), between the two fixed electrodes (3, 4), to form two capacitors (8, 9), each mobile electrode (5) being adapted to move between the fixed electrodes (3, 4), due to the effect of acceleration, so causing a variation of the capacitance of each capacitor (8, 9),

**characterized in that**

- it includes an electronic circuit (10) for adjusting the electrostatic stiffness of a combination of at least two fixed electrodes (3, 4) and a mobile electrode (5) and comprising a control system (20) for detecting the variation of the capacitance of each capacitor (8, 9) by applying two voltages ($+V_m$, $-V_m$) symmetrical about earth, and reacting by applying a feedback voltage between each mobile electrode (5) and one of the fixed electrodes (3, 4) facing the said mobile electrode (5), **in that**
- the springs (7) have a stiffness chosen intentionally to place the mechanical resonant frequency beyond the top frequency of the band of interest, and **in that**
- the circuit (10) for adjusting the electrostatic stiffness is adapted to return the apparent resonant frequency into the band of interest.

2. Accelerometer according to Claim 1, **characterized in that** it comprises two fixed electrodes (3) electrically insulated from each other.

3. Accelerometer according to either preceding claim, **characterized in that** it comprises a single mobile electrode (5).

4. Accelerometer according to any preceding claim, **characterized in that** the electronic circuit (10) enables time-division multiplexing of each mobile electrode (5).

5. Accelerometer according to Claims 2, 3 and 4 in combination, whose multiplexing cycle includes four steps, which are: a first step during which a voltage sample and its symmetrical counterpart relative to earth are respectively applied between each fixed electrode (3, 4) and the mobile electrode (5), a second step during which the capacitor (8, 9) constituted by one of the said two fixed electrodes (3, 4) and the mobile electrode (5) and the capacitor constituted by the other fixed electrode (3, 4) and the mobile electrode (5) are discharged, a third step during which a feedback voltage is applied to one or the other of the capacitors (8, 9) constituted by the mobile electrode (5) and one of the fixed electrodes (3, 4), as a function of a decision taken by the control system (20), and a fourth step during which the operation of the second step is repeated.

6. Accelerometer according to any preceding claim whose electronic circuit (10) varies the amplitudes of the voltages between each fixed electrode (3, 4) and each mobile electrode (5) to adjust the electrostatic stiffness.

7. Accelerometer according to any preceding claim whose electronic circuit (10) adjusts the duration of the time-division multiplexing steps.

8. Accelerometer according to Claim 7, **characterized in that** adjusting the duration of the time-division multiplexing step adjusts the electrostatic stiffness.

9. Accelerometer according to either Claim 6 or Claim 8, **characterized in that** adjusting the electrostatic stiffness compensates the spread of the mechanical stiffness of the springs (7).

10. Accelerometer according to any of Claims 6, 8 and 9, **characterized in that** adjusting the electrostatic stiffness adjusts the sag when it is in a vertical position, without loss of performance.

11. Accelerometer according to any of Claims 6 and 8 to 10, **characterized in that** adjusting the electrostatic stiffness optimizes performance as a function of the wanted band.

12. Accelerometer according to any preceding claim, **characterized in that** the feedback voltage is applied between each mobile electrode (5) and the fixed electrode (3 or 4) in the form of a pulse with a falling edge falling progressively, possibly even to zero, at the end of the pulse.

13. Accelerometer according to any preceding claim, **characterized in that** it includes a parallel RC circuit (18) for generating a feedback voltage in the form of a pulse with a steep rising edge and an exponentially decreasing falling edge.

14. Application of an accelerometer according to any preceding claim to seismic prospecting.

FIG_1

FIG.2

## FIG.3

## FIG.4